# EUROPÄISCHE PATENTSCHRIFT

(11) **EP 2 751 401 B1**
(45) Veröffentlichungstag und Bekanntmachung des Hinweises auf die Patenterteilung: **09.12.2015**
(21) Anmeldenummer: 12748511.8
(22) Anmeldetag: 22.08.2012
(51) Int. Cl.: F01N 3/20

(54) **VORRICHTUNG ZUR BEREITSTELLUNG VON FLÜSSIGEM REDUKTIONSMITTEL**
DEVICE FOR PROVIDING LIQUID REDUCING AGENT
DISPOSITIF DE PRÉPARATION D'UN AGENT RÉDUCTEUR LIQUIDE

(30) Priorität: 02.09.2011 DE 102011112325
(43) Veröffentlichungstag der Anmeldung: 09.07.2014
(73) Patentinhaber: Continental Automotive GmbH, 30165 Hannover (DE)
(72) Erfinder: MAGUIN, Georges, F-57155 Marly (FR); SCHEPERS, Sven, 53844 Troisdorf (DE); HODGSON, Jan, 53840 Troisdorf (DE)
(86) Internationale Anmeldenummer: PCT/EP2012/066363
(87) Internationale Veröffentlichungsnummer: WO 2013/030066

(56) Entgegenhaltungen:
- EP-A1- 2 299 079
- WO-A1-2010/078991
- DE-A1-102008 053 026
- DE-A1-102009 029 400

## Beschreibung

Die Erfindung betrifft eine Vorrichtung zur Bereitstellung von flüssigem Reduktionsmittel für eine Abgasbehandlungsvorrichtung. Insbesondere im Kraftfahrzeugbereich sind Abgasbehandlungsvorrichtungen weit verbreitet, in welche eine zusätzliche Substanz zugeführt wird, um das Abgas einer Verbrennungskraftmaschine zu reinigen. Ein besonders häufig in solchen Abgasbehandlungsvorrichtungen durchgeführtes Abgasreinigungsverfahren ist das Verfahren der selektiven katalytischen Reduktion [*SCR-Verfahren, SCR* = *Selective Catalytic Reduction*]. Bei diesem Verfahren wird dem Abgas ein Reduktionsmittel zugeführt, mit welchem Stickstoffoxidverbindungen im Abgas reduziert werden können. Als Reduktionsmittel wird regelmäßig Ammoniak eingesetzt. Ammoniak wird in Kraftfahrzeugen normalerweise nicht direkt bevorratet, sondern in Form einer Vorläuferlösung, welche zu Ammoniak umgesetzt werden kann. Die Umsetzung kann innerhalb der Abgasbehandlungsvorrichtung erfolgen und/oder in einem dafür vorgesehenen zusätzlichen Reaktor, welcher in der Abgasleitung und/oder abgasextern angeordnet sein kann. Als Reduktionsmittelvorläufer kann beispielsweise eine wässrige Harnstoff-Lösung verwendet werden. Eine 32,5-prozentige Harnstoff-Wasser-Lösung ist als Reduktionsmittelvorläufer unter dem Handelsnamen AdBlue^{®} erhältlich. Die Begriffe "Reduktionsmittel" und "Reduktionsmittelvorläuferlösung" bzw. "Reduktionsmittelvorläufer" werden im Folgenden synonym füreinander verwendet.

Zur Bereitstellung des Reduktionsmittels für eine Abgabehandlungsvorrichtung ist in einem Kraftfahrzeug normalerweise ein Tank für das Reduktionsmittel und eine Fördereinheit zur Förderung des Reduktionsmittels aus dem Tank zu der Abgasbehandlungsvorrichtung vorgesehen. Der Tank und die Fördereinheit sollten möglichst kostengünstig sein und gleichzeitig eine sichere Bereitstellung des Reduktionsmittels gewährleisten. Als problematisch hat sich insbesondere herausgestellt, dass das Reduktionsmittel in dem Tank Verunreinigungen aufweist, welche dazu geeignet sind, die Fördereinheit oder einen Injektor zur Eindüsung des Reduktionsmittels in die Abgasbehandlungsvorrichtung zu beschädigen. Daher weist eine Fördereinheit typischerweise einen Filter auf, durch welchen Verunreinigungen im Reduktionsmittel zurückgehalten werden können.

Aus der DE 10 2008 053 026 A1 ist ein Filtermedium zur Filtration eines Dosierfluids bekannt, wobei sich das Filtermedium an einer Auslassöffnung eines Tanks befindet so dass das Filtermedium beim Austreten des Dosierfluids aus dem Tank durchströmt wird.

Hiervon ausgehend ist es Aufgabe der hier vorliegenden Erfindung, die im Zusammenhang mit dem Stand der Technik geschilderten technischen Probleme zu lösen bzw. zumindest zu lindem. Es soll insbesondere eine besonders kostengünstige Vorrichtung zur zuverlässigen Bereitstellung von flüssigem Reduktionsmittel für eine Abgasbehandlungsvorrichtung vorgestellt werden.

Diese Aufgaben werden gelöst mit einer Vorrichtung gemäß den Merkmalen des Patentanspruchs 1. Weitere vorteilhafte Ausgestaltungen der Vorrichtung sind in den abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Erfingdungsgemäß ist eine Vorrichtung zur Bereitstellung von flüssigem Reduktionsmittel für eine Abgasbehandlungsvorrichtung, aufweisend einen Tank und eine Fördereinheit mit einer Ansaugstelle im Tank, an der Reduktionsmittel aus dem Tank angesaugt werden kann, wobei die Ansaugstelle von einer Trennlage abgedeckt ist, so dass ein geschlossener Zwischenraum zwischen der Ansaugstelle und der Trennlage vorliegt, wobei die Trennlage in einer Ausströmrichtung von dem Zwischenraum in den Tank hinein einen höheren Strömungswiderstand für Reduktionsmittel aufweist als in einer Einströmrichtung von dem Tank in den Zwischenraum hinein.

Die Ansaugstelle im Tank ist vorzugsweise eine Öffnung in der Wand des Tanks, an welche sich eine Leitung anschließt, welche zu der Fördereinheit führt. Ebenso ist möglich, dass die Ansaugstelle in entsprechender Weise an einem Gehäuse der Fördereinheit ausgebildet ist, welches in den Tank hineinragt. Die Trennlage bildet vorzugsweise eine Art Abdeckung über die Ansaugstelle. Die Trennlage kann beispielsweise nach Art einer Haube ausgeführt sein, welche über die Ansaugstelle gesetzt ist. Es ist auch möglich, dass die Ansaugstelle sich in einer Einbuchtung des Tanks bzw. in einer Einbuchtung der Tankwand befindet und die Trennlage diese Einbuchtung verschließt bzw. verdeckt. Mit anderen Worten überspannt die Trennlage bevorzugt die Ansaugstelle.

Der Zwischenraum befindet sich vorzugsweise zwischen der Trennlage und einer Tankwand im Bereich der Ansaugstelle. Der Strömungswiderstand für Reduktionsmittel in Einströmrichtung oder in Ausströmrichtung ist durch die Menge an Reduktionsmittel definiert, welche bei einer vorgegebenen Druckdifferenz durch die Trennlage fließen kann. Der Strömungswiderstand muss bei unterschiedlichen Druckdifferenzen zwischen dem Zwischenraum und dem Tank nicht konstant sein. Es ist auch möglich, dass der Strömungswiderstand sich in Abhängigkeit der Druckdifferenz verändert. Im Rahmen der Erfindung ist bevorzugt, dass der Strömungswiderstand in Ausströmrichtung insbesondere im Bereich niedriger Drücke (Drücke bis 0,2 bar und insbesondere Drücke bis 0,1 bar) gegenüber dem Strömungswiderstand in Einströmrichtung wesentlich erhöht ist. 0,2 bar entsprechen einer Wassersäule von 2 m [Meter], 0,1 bar entsprechen einer Wässersäule von 1 m [Meter]. Höhere Drücke treten zwischen dem Tank und dem Zwischenraum normalerweise nicht auf. Die Druckdifferenz zwischen dem Zwischenraum und dem Tank wird im Wesentlichen durch den Massenstrom an Reduktionsmittel durch die Trennlage und durch die Flüssigkeitspegel im Zwischenraum und im Tank, sowie durch den Aufprall der Flüssigkeit bei Schwappbewegungen im Tank und im Zwischenraum bestimmt. Bei diesen Effekten ist vor allem der Anteil der Druckdifferenz durch den auftretenden Massenstrom an Reduktionsmittel vernachlässigbar. Dementsprechend sind die auftretenden Druckdifferenzen im Wesentlichen durch die Baugröße des Tanks bestimmt und überschreiten sehr selten die weiter oben genannten 0,2 bar. Daher ist es für die Funktion der Trennlage weniger relevant, wie diese sich bei höheren Druckdifferenzen verhält. Es ist beispielsweise möglich, dass die Strömungswiderstände der Trennlage in Einströmrichtung und in Ausströmrichtung bei Druckdifferenzen von mehr als 0,2 wieder ähnlicher werden oder sich vollständig angleichen.

Durch eine solche unterschiedliche Ausgestaltung der Strömungswiderstände in Einströmrichtung und Ausströmrichtung kann im regulären Betrieb sichergestellt werden, dass Reduktionsmittel, welches durch die Trennlage in den Zwischenraum gelangt ist, nicht oder nur in einem begrenzten Maße wieder zurück in den Tank fließt.

Mit einer Trennlage wird insbesondere eine räumliche Abtrennung des Zwischenraums vom restlichen Tankvolumen erreicht, der z. B. als Zwischenspeicher oder Reservoir für die Fördereinheit dient. Das dort befindliche Reduktionsmittel kann eine andere Eigenschaft (z. B. eine andere Sauberkeit oder eine andere Reinheit) aufweisen als das Reduktionsmittel im restlichen Tank.

Die Trennlage kann auch mit einer Heizung ausgestattet sein, mit welcher das Reduktionsmittel in der Umgebung, insbesondere in dem Zwischenraum, aufgeheizt werden kann. Die Heizung kann beispielsweise wenigstens ein Heizelement (insbesondere PTC-Heizelemente) umfassen, welches in der Trennlage eingearbeitet ist. Beispielsweise können Heizdrähte in die Trennlage eingewoben sein. Diese Heizung kann auch dazu eingerichtet sein, das Reduktionsmittel in dem Tank aufzuheizen, jedoch sollte die Heizung überwiegend das Reduktionsmittel in dem Zwischenraum aufheizen. Bevorzugt wird die von der Heizung abgegebene Wärme zunächst überwiegend in den Zwischenraum abgegeben. Wenn das Reduktionsmittel in dem Zwischenraum flüssig ist, gelangt die Wärme der Heizung auch in den Tank. Die Heizung ist dazu vorzugsweise auf einer zu dem Zwischenraum gewandten inneren Seite der Trennlage vorgesehen.

Die Trennlage kann bevorzugt mehrere oder verschiedene Funktionen bei der Bereitstellung von Reduktionsmittel erfüllen, wie Filtern, Sieben, Heizen usw.

Die Trennlage kann auch einen Füllstandsensor zur Messung des Füllstandes in dem Tank aufweisen. Der Füllstandsensor kann beispielsweise nach Art von elektrischen Kontakten ausgebildet sein, welche an der Trennlage befestigt sind. Ebenso ist möglich, dass durch Prüfung des elektrischen Widerstandes einer Komponente (insbesondere eines Heizelements) der Trennlage auf die Temperatur geschlossen wird.

Die beschriebene Vorrichtung ist weiter vorteilhaft, wenn die Trennlage für Reduktionsmittel in Einströmrichtung zumindest bis zu einer Schwelldruckdifferenz zwischen dem Tank und dem Zwischenraum von 0,01 bar bis 0,1 bar nur unidirektional durchlässig ist.

Durch eine derartige Ausgestaltung der Trennlage kann zumindest im Bereich der Druckdifferenzen zwischen Tank und Zwischenraum, welche im regulären Betrieb auftreten, vollständig verhindert werden, dass Reduktionsmittel vom Zwischenraum zurück in den Tank strömt. Die Wirkung der Trennlage ist damit besonders effektiv.

Eine solche Trennlage kann eine semipermeable Struktur sein, also mit anderen Worten insbesondere eine Struktur, die halb durchlässig, d. h. sie lässt nur bestimmte Stoffe (Reduktionsmittelanteile) durch und/oder Stoffe nur in einer (einzigen) Richtung durch. Diese Membran kann z. B. mehrere Lagen eines Textilgewebes umfassen, wobei insbesondere eine Teflon-Lage (Polytetrafluorethylen) vorgesehen ist.

Eine solche Trennlage kann aus einer Kombination einer Filterschicht/Siebschicht mit einem Schwamm auf der gefilterten Seite (im vorliegenden Fall auf der Innenseite) bestehen. Der Schwamm kann als dünne Schwammschicht ausgebildet sein, welche auf der Filterschicht/Siebschicht anliegt bzw. mit der Filterschicht/Siebschicht fest verbunden ist. Die Schwammschicht ist vorzugsweise dünner als 2 mm [Millimeter], und besonders bevorzugt dünner als 1 mm. In dem Schwamm bzw. der Schwammschicht wirken Kapillarkräfte. Durch diese Kapillarkräfte hält die Trennlage ein Volumen an Reduktionsmittel zurück. So wird eine Sperrschicht ausgebildet, welche einen Rückfluss des Reduktionsmittels durch die Filterschicht/Siebschicht verhindert.

Die Vorrichtung ist auch vorteilhaft, wenn die Trennlage ein Filter ist, der zumindest eine Sperrschicht aufweist, welche den Strömungswiderstand der Trennlage in Ausströmrichtung erhöht.

Die Sperrschicht hat in Ausströmrichtung zumindest im Bereich niedriger Druckdifferenzen zwischen dem Zwischenraum und dem Tank eine Sperrwirkung. Hiermit ist gemeint, dass die Sperrschicht eine Strömung von Reduktionsmittel aus dem Tank heraus verhindert.

Auch eine derartige Sperrschicht kann mit einer geeigneten sempermeablen Struktur gebildet sein. Eine Sperrschicht kann ggf. auch mehrlagig ausgeführt sein, um eine verbesserte Sperrwirkung zu gewährleisten.

Somit kann die Trennlage eine Filterwirkung haben. In den Zwischenraum einströmendes Reduktionsmittel wird gefiltert. So können Verunreinigungen des Reduktionsmittels im Tank von der Ansaugstelle ferngehalten werden. Es wird verhindert, dass Verunreinigungen in den Zwischenraum bzw. zu der Ansaugstelle gelangen. Gleichzeitig wird durch den erhöhten Strömungswiderstand in Ausströmrichtung gewährleistet, dass bereits gefiltertes Reduktionsmittel nicht aus dem Zwischenraum zurück in den Tank gelangt. So kann verhindert werden, dass Reduktionsmittel doppelt gefiltert wird. Gleichzeitig befindet sich in dem Zwischenraum in unmittelbarer Umgebung der Ansaugstelle jeweils ein Reservoir an gefiltertem Reduktionsmittel.

Die Sperrwirkung und die Filterwirkung können in zwei unterschiedlichen Schichten der Trennlage realisiert sein. Dann ist neben der Sperrschicht vorzugsweise auch noch eine Filterschicht vorgesehen, welche die Filterwirkung übernimmt. Die Trennlage ist dann mehrlagig. Die Sperrschicht und die Filterschicht können auch in einer gemeinsamen Schicht realisiert sein, welche die beschriebene Sperrwirkung und die beschriebene Filterwirkung miteinander kombiniert. Die kombinierte Filterschicht und Sperrschicht kann beispielsweise Poren und/oder Kanäle aufweisen, die (unter normalen Betriebsbedingungen) in Einströmrichtung für Reduktionsmittel durchlässig sind und Partikel die größer sind als die Poren bzw. Kanäle zurückhalten, und die in Ausströmrichtung weder für Reduktionsmittel noch für derartige Partikel durchlässig sind.

Die Vorrichtung ist auch vorteilhaft, wenn die Trennlage ein Sieb ist, welches zumindest ein Strömungsbehinderungsmittel aufweist, welches den Strömungswiderstand der Trennlage in Ausströmrichtung erhöht.

Durch ein Sieb ist es ebenfalls möglich, Reduktionsmittel auf dem Weg aus dem Tank in den Zwischenraum zu reinigen. Ein Sieb hat Öffnungen mit einer einheitlichen Größe. Die Öffnungen können beispielsweise einen einheitlichen Durchmesser von weniger als 1 mm [Millimeter], vorzugsweise weniger als 0,5 mm [Millimeter] und besonders bevorzugt zwischen 10 µm [Mikrometer] und 20 µm haben. Durch ein Sieb können Partikel im Reduktionsmittel zurückgehalten werden, so dass diese nicht in den Zwischenraum und damit auch nicht zu der Ansaugstelle gelangen. Zur Erhöhung des Strömungswiderstands aus dem Zwischenraum zurück in den Tank kann bei der Ausführung der Trennlage als Sieb zumindest ein Strömungsbehinderungsmittel vorgesehen sein. Strömungsbehinderungsmittel können beispielsweise Ventilmittel sein, welche die Öffnungen des Siebs im Falle eines sich anbahnenden Rückstroms aus dem Zwischenraum in den Tank (in Ausströmrichtung) verschließen. Strömungsbehinderungsmittel bzw. Ventilmittel können beispielsweise bewegliche Fahnen sein, welche einseitig an dem Sieb befestigt sind und sich im Falle einer Strömung ausgehend von der Seite des Siebes mit den Fahnen vor die Öffnungen des Siebes legen. Im Falle der als Sieb ausgeführten Trennlage bei der beschriebenen Vorrichtung sind die Fahnen vorzugsweise auf der zwischenraumseitigen Seite des Siebes befestigt. Einen Rückstrom aus dem Zwischenraum zurück in den Tank (in Ausströmrichtung) können die Fahnen effektiv verhindern.

Weiterhin ist die Vorrichtung vorteilhaft, wenn die Fördereinheit in einer Kammer angeordnet ist, welche zumindest teilweise in dem Tank angeordnet ist, und die Trennlage die Kammer derart umgibt, dass ein umlaufender Zwischenraum zwischen der Kammer und der Trennlage vorliegt.

Die Trennlage umgibt die Kammer vorzugsweise radial umlaufend, so dass z. B. ein umlaufender, insbesondere ein ringförmiger Zwischenraum zwischen der Kammer und der Trennlage vorliegt. Die Kammer ist vorzugsweise Bestandteil des Tankbodens. Die Kammer erstreckt sich vorzugsweise ausgehend von dem Tankboden nach oben in das Tankvolumen hinein. Die Kammer erstreckt sich aber vorzugsweise maximal über 30 % und besonders bevorzugt maximal über 15 % der Tankhöhe. Bei dieser Bauart kann die Ansaugstelle sich an der Kammer und damit in unmittelbarer Nähe der Fördereinheit befinden und gleichzeitig in der Nähe des Tankbodens angeordnet sein, so dass das Reduktionsmittel aus dem Tank möglichst vollständig über die Ansaugstelle angesaugt werden kann.

Zwischen der Kammer und der Trennlage kann auch eine Abstandstruktur vorgesehen sein, um einen Abstand zwischen der Kammer und der Trennlage sicher zu stellen. So kann ein ausreichend großes Reservoir für gefiltertes Reduktionsmittel zwischen der Kammer und der Trennlage bereitgestellt werden. Aufgrund der Eigenschaften der Trennlage fließt das Reduktionsmittel aus diesem Reservoir nicht oder nur zeitlich verzögert zurück in den Tank. So kann erreicht werden, dass bei Kurvenfahrten und bei Schwappbewegungen im Tank jeweils Reduktionsmittel an der Ansaugstelle zur Verfügung steht.

Auch vorteilhaft ist die Vorrichtung, wenn in dem Tank um die Trennlage herum zumindest eine Leitstruktur angeordnet ist, welche das Reduktionsmittel hin zu der Trennlage leitet.

Die Leitstruktur kann beispielsweise in Form von Leitblechen ausgebildet sein, welche das Reduktionsmittel insbesondere bei einer Schräglage des Tanks oder bei Schwappbewegungen im Tank hin zu der Trennlage leiten. So kann erreicht werden, dass sich das Reduktionsmittel im Tank außen vor der Trennlage sammelt und in den Zwischenraum geführt wird. Aus dem Zwischenraum fließt das Reduktionsmittel aufgrund des erhöhten Strömungswiderstands in Ausströmrichtung nicht oder nur wesentlich langsamer wieder hinaus. So verbleibt auch bei einer Schräglage des Tanks oder bei Schwappbewegungen im Tank jeweils in dem Zwischenraum in unmittelbarer Umgebung der Ansaugstelle eine Menge an Reduktionsmittel, so dass die Förderung von Reduktionsmittel mit der Fördereinheit nicht unterbrochen wird. Dies gilt selbst dann, wenn der Reduktionsmittelfüllstand in dem Tank bereits stark reduziert ist.

Die Vorrichtung ist darüber hinaus vorteilhaft, wenn die Trennlage für Luftblasen in Ausströmrichtung aus dem Zwischenraum hinaus durchlässig ist. So kann verhindert werden, dass sich Luftblasen in dem Zwischenraum sammeln. Geeignete semipermeable Materialien, die für Reduktionsmittel nur in eine Richtung durchlässig sind und daher als Sperrschicht wirken, können für Luft bidirektional, also in beide Richtungen, durchlässig sein. Mit Membranen aus derartigen Materialien kann eine Durchlässigkeit der Trennlage für Luftblasen realisiert sein.

Weiterhin vorteilhaft ist die Vorrichtung, wenn die Trennlage einen Wärmefluss in Einströmrichtung begünstigt und den Wärmefluss in Ausströmrichtung reduziert.

So kann verhindert werden, dass das Reduktionsmittel in dem Zwischenraum im Einfrierfall schneller einfriert als in dem Tank. Vorzugsweise verbleibt in dem Zwischenraum flüssiges Reduktionsmittel, wenn das Reduktionsmittel im Tank bereits eingefroren ist. So ist es möglich, dass beim Start der Fördereinheit gegebenenfalls direkt flüssiges Reduktionsmittel an der Ansaugstelle vorliegt, obwohl das Reduktionsmittel in dem Tank größtenteils eingefroren ist. Daher ist es dann nicht notwendig den Zwischenraum zunächst mit einer Heizung freizuschmelzen.

Auch vorteilhaft ist die Vorrichtung, wenn die Trennlage eine Stützstruktur aufweist, die der Trennlage Stabilität gibt, wobei der Strömungswiderstand der Stützstruktur für Reduktionsmittel in Einströmrichtung und in Ausströmrichtung vernachlässigbar ist.

Der Strömungswiderstand ist insbesondere im Vergleich zu dem Strömungswiderstand von weiteren Schichten der Trennlage vernachlässigbar. Die Stützstruktur erfüllt somit praktisch keine relevante Filterwirkung, sondern sie dient lediglich dazu, die Form und Position der Trennlage vorzugeben. Die Stützstruktur kann beispielsweise als Blechkonstruktion ausgeführt sein, welche die weiteren Schichten der Trennlage umschließt bzw. an welcher die weiteren Schichten der Trennlage anliegen. Die Stützstruktur kann beispielsweise zumindest einen Rahmen für die Trennlage bilden. Die Stützstruktur kann als Fachwerkkonstruktion ausgebildet sein, welche ein Balkengerüst aufspannt, an dem die weiteren Schichten der Trennlage anliegen können. Eine Stützstruktur ist insbesondere vorteilhaft, wenn die Trennlage einen Filter umfasst, weil ein Filter normalerweise eine relativ geringe mechanische Stabilität aufweist und der Filter durch eine Stützstruktur daher besonders vorteilhaft in Position bzw. in der vorgesehenen Form gehalten werden kann. Die Stützstruktur und weitere Schichten (beispielsweise eine Filterschicht, eine Wärmeschutzschicht und/oder eine Sperrschicht) der Trennlage können auch miteinander verbunden sein. Es ist beispielsweise möglich, dass die Stützstruktur weitere Schichten der Trennlage teilweise durchdringt und/oder teilweise in weitere Schichten der Trennlage eindringt und die Stützstruktur weitere Schichten der Trennlage so mechanisch hält. Weitere Schichten der Trennlage können an der Stützstruktur auch angeschweißt oder angeklebt sein. Die Verbindung zwischen der Trennlage und der Stützstruktur kann in linienartigen Bereichen (beispielsweise an den Rändern der Trennlage) und/oder flächig ausgebildet sein.

In einer weiteren vorteilhaften Ausführungsvariante der Vorrichtung sind die Eigenschaften der Trennlage über die Fläche der Trennlage unterschiedlich. Hiermit ist insbesondere gemeint, dass die Trennlage zumindest abschnittsweise verschiedene Eigenschaften aufweist. Bevorzugt kann die Fläche der Trennlage in zumindest zwei Zonen unterteilt werden, wobei die Eigenschaften der Trennlage in den Zonen unterschiedlich sind. Es ist auch möglich, dass sich die Eigenschaften der Trennlage über die Fläche der Trennlage betrachtet kontinuierlich ändern.

Mit den Eigenschaften der Trennlage sind hier sämtliche weiter oben bereits beschriebenen Eigenschaften gemeint, wie beispielsweise die unidirektionale Durchlässigkeit oder die bidirektionale Durchlässigkeit der Trennlage für Reduktionsmittel und/oder für Luft, oder der Strömungswiderstand der Trennlage für Reduktionsmittel und/oder für Luft in Einströmrichtung und in Ausströmrichtung.

Besonders bevorzugt ist, wenn die Trennlage eine erste Zone und eine zweite Zone aufweist, wobei sich (bei vorgesehener Einbauausrichtung der Vorrichtung) die erste Zone oberhalb der zweiten Zone befindet, wobei die Trennlage in der zweiten Zone in einer Ausströmrichtung von dem Zwischenraum in den Tank hinein einen höheren Strömungswiderstand für Reduktionsmittel aufweist als in einer Einströmrichtung von dem Tank in den Zwischenraum hinein, und wobei die Trennlage in der ersten Zone eine gegenüber der zweiten Zone verbesserte Durchlässigkeit aufweist. Vorzugsweise ist in der ersten Zone insbesondere eine verbesserte Durchlässigkeit für Luft in Ausströmrichtung gegeben.

Darüber hinaus ist es bevorzugt, wenn die Trennlage in der ersten Zone zumindest teilweise aus einem ersten Material aufgebaut ist und in der zweiten Zone zumindest teilweise aus einem zweiten Material aufgebaut ist, wobei das erste Material und das zweite Material insbesondere in Bezug auf die Durchlässigkeit für Luft und/oder für Reduktionsmittel unterschiedliche Eigenschaften aufweisen. Vorzugsweise ist das zweite Material für die Trennlage nicht in der ersten Zone verwendet und das erste Material für die Trennlage nicht in der zweiten Zone verwendet. Das erste Material hat vorzugsweise gegenüber dem zweiten Material eine verbesserte Durchlässigkeit für Luft. Das zweite Material hat vorzugsweise in beide Durchströmungsrichtungen (in einer Einströmrichtung und in einer Ausströmrichtung) einen unterschiedlichen Strömungswiderstand für Reduktionsmittel. Durch die zweite Zone der Trennlage wird vorzugsweise ein Raum gebildet, in dem sich Reduktionsmittel im Betrieb der Vorrichtung sammelt. Luftblasen in dem Zwischenraum zwischen der Ansaugstelle und der Trennlage können so durch die erste Zone aus dem Zwischenraum entweichen.

Im Rahmen der Erfindung auch beansprucht wird ein Kraftfahrzeug aufweisend eine Verbrennungskraftmaschine und eine Abgasbehandlungsvorrichtung zur Reinigung der Abgase der Verbrennungskraftmaschine, sowie eine Vorrichtung, welche dazu eingerichtet ist, die Abgasbehandlungsvorrichtung mit Reduktionsmittel zu versorgen. Die Abgasbehandlungsvorrichtung wird von dem Abgas der Verbrennungskraftmaschine mit einer Abgasströmungsrichtung durchströmt. Die Vorrichtung führt das Reduktionsmittel der Abgasbehandlungsvorrichtung über einen Injektor zu. Der Injektor ist zur Eindüsung und/oder zur Einspritzung des Reduktionsmittels in die Abgasbehandlungsvorrichtung eingerichtet. Der Injektor kann entweder eine selbstöffnende Düse sein oder durch ein ansteuerbares Ventilelement die Menge an Reduktionsmittel steuern, die der Abgasbehandlungsvorrichtung zugeführt wird. In der Abgasbehandlungsvorrichtung ist ein SCR-Katalysator angeordnet, in dem das SCR-Verfahren zur Abgasreinigung durchgeführt wird. Dabei werden Stickstoffoxidverbindungen in dem Abgas mit dem Reduktionsmittel zu unschädlichen Stoffen, wie Wasser, Kohlendioxid und Stickstoff umgesetzt.

Es kann weiter vorteilhaft sein, dass in und/oder an der Trennlage zumindest ein Füllstandsensor angeordnet bzw. integriert ist. Mit einem Füllstandsensor kann der Füllstand des Reduktionsmittels im Tank überwacht werden. Der Füllstandsensor kann ein kontinuierlicher Füllstandsensor sein, der in einem Bereich zwischen einem minimalen messbaren Füllstand und einem maximalen messbaren Füllstand eine permanente Überwachung des Füllstandes ermöglicht. Der Füllstandsensor kann auch diskret sein. Mit einem diskreten Füllstandsensor kann lediglich festgestellt werden, ob in (wenigstens) einer bestimmten Höhe Reduktionsmittel im Tank vorliegt, und der Füllstand im Tank somit oberhalb der von dem Füllstandsensor überwachten Höhe liegt. Insbesondere bei diskreten Füllstandsensoren bietet es sich an, wenn in und/oder an dem Partikelsieb mehrere Füllstandsensoren angeordnet sind. So kann eine genauere Information über den Füllstand im Tank gewonnen werden.

Der zumindest eine Füllstandsensor kann beispielsweise nach Art eines elektrischen Leiters und/oder nach Art eines elektrischen Kontaktes realisiert sein. Die Messung des Füllstandes kann bevorzugt über einen elektrischen Widerstand und/oder eine elektrische Kapazität bestimmt werden. Der elektrische Widerstand und/oder die elektrische Kapazität zwischen zwei elektrischen Kontakten oder zwei elektrischen Leitern ändert sich in Abhängigkeit davon, ob an/zwischen den Kontakten bzw. an/zwischen den Leitern Reduktionsmittel vorliegt oder nicht. Dies kann für die Füllstandbestimmung genutzt werden. Die elektrischen Kontakte und/oder die elektrischen Leiter können an der Trennlage beispielsweise angeklebt, angeschweißt und/oder angelötet sein. Zumindest eine Schicht (Stützschicht, Sperrschicht usw.) der Trennlage kann auch als Gewebe oder als Geflecht realisiert sein. Dann können die elektrischen Kontakte und/oder die elektrischen Leiter in diese Schicht eingewoben oder eingeflochten sein.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Ausführungsvariante einer Vorrichtung zum Bereitstellen von flüssigem Reduktionsmittel,
- Fig. 2:: eine zweite Ausführungsvariante einer Vorrichtung zum Bereitstellen von flüssigem Reduktionsmittel,
- Fig. 3:: eine dritte Ausführungsvariante einer Vorrichtung zum Bereitstellen von flüssigem Reduktionsmittel,
- Fig. 4:: ein Sieb für eine Vorrichtung zum Bereitstellen von flüssigem Reduktionsmittel,
- Fig. 5:: eine Ansicht von oben auf eine Vorrichtung zum Bereitstellen von flüssigem Reduktionsmittel,
- Fig. 6:: ein Kraftfahrzeug, aufweisend eine Vorrichtung zum Bereitstellen von flüssigem Reduktionsmittel, und
- Fig. 7:: eine vierte Ausführungsvariante einer Vorrichtung zum Bereitstellen von flüssigem Reduktionsmittel.

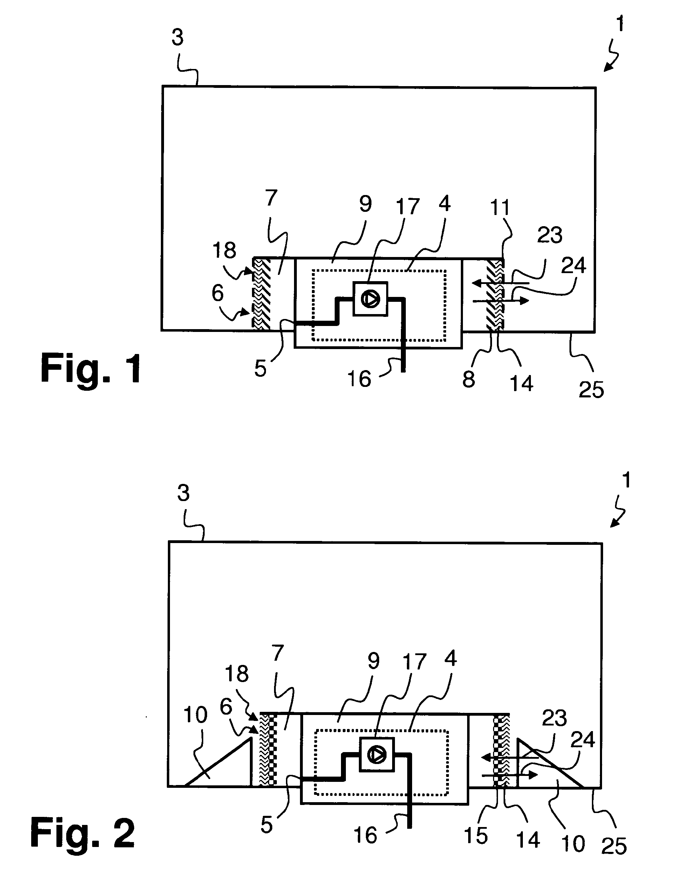

Die Fig. 1, 2 und 3 zeigen verschiedene Ausführungsvarianten einer Vorrichtung 1 zur Bereitstellung von flüssigem Reduktionsmittel. Die in den Fig. 1, 2 und 3 jeweils dargestellten verschiedenen Merkmalskombinationen einer solchen Vorrichtung sind nur beispielhaft. In verschiedenen Figuren dargestellte Merkmale können beliebig miteinander und mit weiteren Merkmalen aus der gesamten Beschreibung kombiniert werden.

Zu sehen ist jeweils die Vorrichtung 1, aufweisend den Tank 3, in welchem Reduktionsmittel speicherbar ist, und die Fördereinheit 4, welche in einer Kammer 9 angeordnet ist. Die Kammer 9 ist Bestandteil des Tankbodens 25 bzw. in den Tankboden 25 eingesetzt. Im Bereich des Tankbodens 25 befindet sich an der Kammer 9 die Ansaugstelle 5, durch welche Reduktionsmittel angesaugt werden kann. Zum Ansaugen von Reduktionsmittel weist die Fördereinheit 4 eine Pumpe 17 auf. Die Fördereinheit 4 bzw. die Kammer 9 ist von einer Trennlage 6 umgeben. Gleichzeitig deckt die Trennlage 6 die Ansaugstelle 5 ab, wobei ein Zwischenraum 7 zwischen der Trennlage 6 und der Ansaugstelle 5 bzw. zwischen der Trennlage 6 und der Fördereinheit 4 bzw. zwischen der Trennlage 6 und der Kammer 9 ausgebildet ist. Durch die Trennlage 6 hindurch existiert eine Einströmrichtung 23 vom Tank 3 in den Zwischenraum 7. Darüber hinaus existiert durch die Trennlage 6 hindurch eine Ausströmrichtung 24 von dem Zwischenraum 7 zurück in den Tank 3. Die Fördereinheit 4 stellt das an der Ansaugstelle 5 angesaugte Reduktionsmittel an einem Leitungsanschluss 16 zur Verfügung, an welchen eine Leitung anschließbar ist, durch welche das Reduktionsmittel zu einer Abgasbehandlungsvorrichtung gefördert werden kann.

In der Fig. 1 ist nun eine Trennlage 6 dargestellt, welche eine Filterschicht 14 zur Filterung des Reduktionsmittels aufweist und darüber hinaus eine Sperrschicht 8, welche den Strömungswiderstand der Trennlage 6 derart beeinflusst, dass der Strömungswiderstand für Reduktionsmittel in Einströmrichtung 23 geringer ist als der Strömungswiderstand in Ausströmrichtung 24. Zusätzlich weist die Trennlage 6 gemäß der Fig. 1 eine Stützstruktur 11 auf, welche die Trennlage 6 in ihrer Position hält, bzw. die Form der Trennlage 6 vorgibt. Die Stützstruktur 11 ist beispielsweise als Lochblech ausgeführt.

Gemäß der Fig. 2 weist die Trennlage 6 eine Filterschicht 14 sowie eine Wärmeschutzschicht 15 auf, wobei die Wärmeschutzschicht 15 dazu geeignet ist, den Wärmefluss in Ausströmrichtung 24 zu reduzieren, so dass der Zwischenraum 7 der Vorrichtung 1 weniger schnell auskühlt und nach einer Einfrierphase, in welcher das Reduktionsmittel in dem Tank 3 eingefroren ist, in dem Zwischenraum 7 nach Möglichkeit noch flüssiges Reduktionsmittel vorliegt. Darüber hinaus ist bei der Ausführungsvariante der Fig. 2 eine Leitstruktur 10 dargestellt, welche dafür sorgt, dass bei einer Schräglage der Vorrichtung 1 bzw. des Tanks 3 oder bei Schwappbewegungen in dem Tank 3 Reduktionsmittel hin zu der Trennlage 6 gelangt.

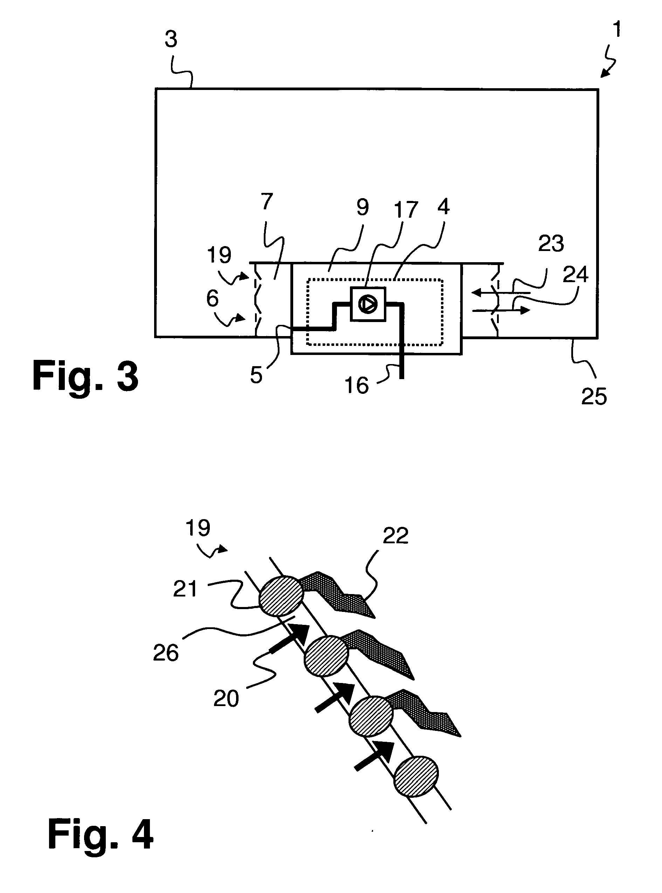

Bei der Ausführungsvariante gemäß Fig. 3 ist die Trennlage 6 mit einem Sieb 19 gebildet, welches derart ausgebildet ist, dass die Strömung von Reduktionsmittel in Ausströmrichtung 24 erschwert ist und die Strömung von Reduktionsmittel in Einströmrichtung 23 vereinfacht ist.

Eine beispielhafte Ausgestaltung des Siebs 19 aus Fig. 3 findet sich in Fig. 4. Das Sieb 19 ist beispielsweise aus Drähten 21 aufgebaut, zwischen welchen sich Öffnungen 26 befinden, durch welche eine Reduktionsmittelströmung 20 strömen kann. Einseitig sind an den Drähten 21 des Siebs 19 Strömungsbehinderungsmittel 22 vorgesehen, welche sich vor die Öffnungen 26 legen können, wenn die Reduktionsmittelströmung 20 in umgekehrter Richtung fließt. Die Strömungsbehinderungsmittel 22 wirken als Ventilmittel. Ein solches Sieb 19 kann gegebenenfalls auch mit einer Filterschicht 14 kombiniert werden. Ein solches Sieb 19 kann dann zugleich eine Stützfunktion für die Filterschicht 14 übernehmen und die Form bzw. die Gestalt und Position der Filterschicht 14 festlegen. Die Trennlage 6 ist dann von einem Sieb 19 mit Strömungsbehinderungsmitteln 22 in Kombination mit einer Filterschicht 14 gebildet.

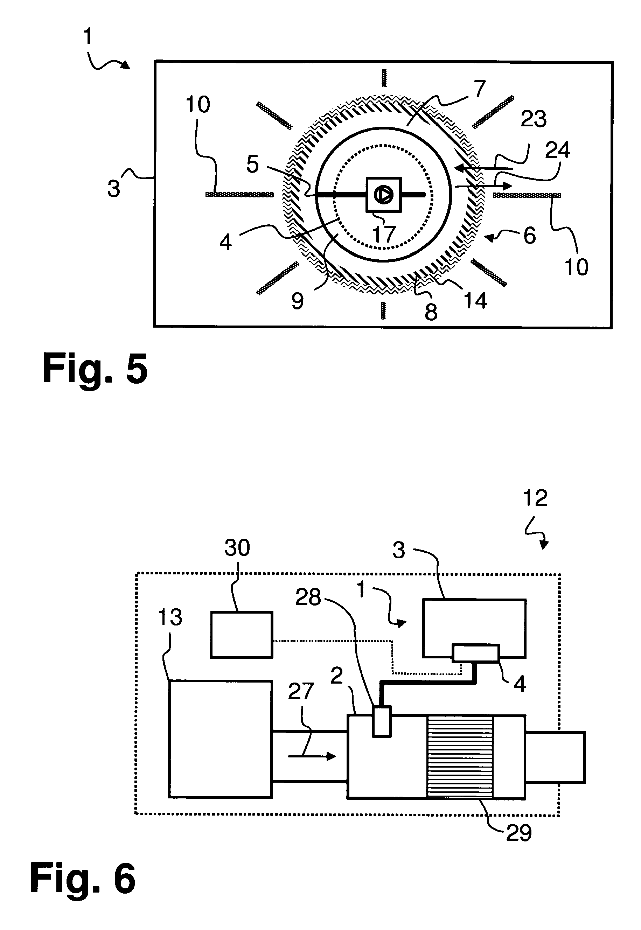

In Fig. 5 ist eine Vorrichtung 1 von oben dargestellt. Zu sehen ist der Tank 3. In dem Tank 3 befindet sich die Kammer 9, in welcher die Fördereinheit 4 angeordnet ist. An der Kammer 9 befindet sich die Ansaugstelle 5, durch welche Reduktionsmittel zu der Fördereinheit 4 gelangen kann. Reduktionsmittel wird von der Fördereinheit 4 mit Hilfe der Pumpe 17 angesaugt. Um die Kammer 9 bzw. die Fördereinheit 4 herum befindet sich die Trennlage 6, so dass um die Kammer 9 herum ein ringförmiger Zwischenraum 7 ausgebildet ist, welcher die Ansaugstelle 5 abdeckt. Um die Trennlage 6 herum sind verschiedene Leitstrukturen 10 angeordnet, die das Reduktionsmittel bei einer Schräglage des Tanks 3 bzw. der Vorrichtung 1 oder bei Schwappbewegungen in dem Tank 3 hin zu der Trennlage 6 lenken. Durch die Trennlage hindurch sind eine Einströmrichtung 23 und eine Ausströmrichtung 24 definiert. Die Trennlage 6 ist in der Fig. 5 beispielhaft mit einer Filterschicht 14 und mit einer Sperrschicht 8 ausgeführt.

Fig. 6 zeigt ein Kraftfahrzeug 12 aufweisend eine Verbrennungskraftmaschine 13 und eine Abgasbehandlungsvorrichtung 2 zur Reinigung der Abgase der Verbrennungskraftmaschine 13. Die Abgasbehandlungsvorrichtung 2 wird ausgehend von der Verbrennungskraftmaschine 2 von dem Abgas mit einer Abgasströmungsrichtung 27 durchströmt. In die Abgasbehandlungsvorrichtung 2 ist Reduktionsmittel mit einer Vorrichtung 1 zur Bereitstellung von flüssigem Reduktionsmittel über einen Injektor 28 zuführbar. Die Vorrichtung 1 weist dazu einen Tank 3 auf, in welchem das Reduktionsmittel gespeichert ist sowie eine Fördereinheit 4, welche das Reduktionsmittel aus dem Tank 3 hinaus zu dem Injektor 28 fördert. Die Vorrichtung 1 kann entsprechend der weiter oben angegebenen Beschreibung gestaltet sein. In der Abgasbehandlungsvorrichtung 2 ist ein SCR-Katalysator 29 angeordnet, in welchem das SCR-Verfahren durchgeführt wird. Es werden Stickstoffoxidverbindungen in dem Abgas mit dem Reduktionsmittel umgesetzt. Zum Betrieb der Vorrichtung 1 weist das Kraftfahrzeug 12 auch ein Steuergerät 30 auf, welches dazu eingerichtet ist, den Betrieb der Vorrichtung 1 zu steuern.

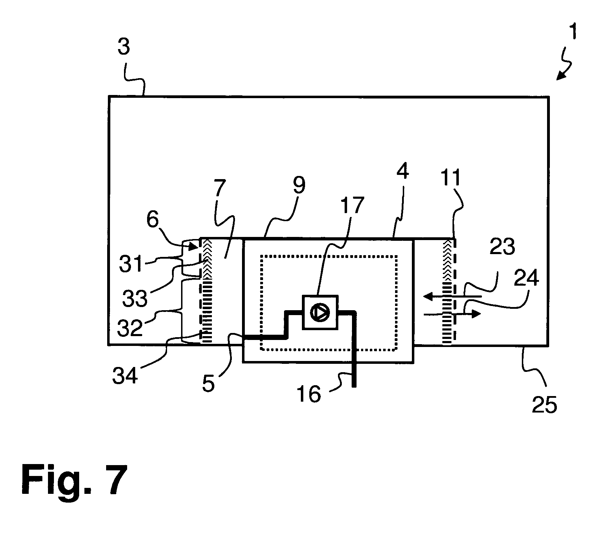

Fig. 7 zeigt eine weitere Ausführungsvariante einer Vorrichtung 1, aufweisend einen Tank 3 und eine Fördereinheit 4, die in einer Kammer 9 am Tankboden 25 angeordnet ist. Die Fördereinheit 4 entnimmt das Reduktionsmittel aus dem Tank 3 an einer Ansaugstelle 5. Die Fördereinheit 4 weist eine Pumpe 17 auf, mit der das flüssige Additiv gepumpt wird. Die Fördereinheit 4 stellt das flüssige Additiv an dem Leitungsanschluss 16 bereit. Die Ansaugstelle 5 ist von einer Trennlage 6 abgedeckt, so dass ein geschlossener Zwischenraum 7 gebildet ist. Die Trennlage 6 ist wie ein Zylinder geformt und (rund) um die Kammer 9 herum angeordnet. Die Oberfläche dieses Zylinders bildet die Fläche der Trennlage 6. Die Trennlage 6 weist eine Stützstruktur 11 auf, die nach Art eines Siebes ausgebildet sein kann. Die Fläche der Trennlage 6 ist in eine erste Zone 31 und in eine zweite Zone 32 aufgeteilt. In der ersten Zone 31 ist die Trennlage 6 zumindest teilweise aus einem ersten Material 33 gebildet. In der zweiten Zone 32 ist die Trennlage 6 zumindest teilweise aus einem zweiten Material 34 gebildet. Das erste Material 33 weist gegenüber dem zweiten Material 34 eine verbesserte Durchlässigkeit für Luft auf. Das zweite Material 34 weist für Reduktionsmittel vorzugsweise in einer Einströmrichtung 23 eine verbesserte Durchlässigkeit auf als in einer Ausströmrichtung 24.

Offensichtlich ist, dass der Fachmann den Offenbarungsgehalt der Figuren und dazugehörigen Erläuterungen ohne weiteres miteinander kombinieren kann, so dass Details einer Ausführungsvariante mit Details einer anderen Ausführungsvariante gemeinsam zur Anwendung kommen. Dies soll nur ausgeschlossen sein, soweit das vorstehend explizit angeführt ist.

Somit ist eine besonders kostengünstige Vorrichtung zur zuverlässigen Bereitstellung von flüssigem Reduktionsmittel für eine Abgasbehandlungsvorrichtung vorgestellt worden.

### Bezugszeichenliste

- 1: Vorrichtung
- 2: Abgasbehandlungsvorrichtung
- 3: Tank
- 4: Fördereinheit
- 5: Ansaugstelle
- 6: Trennlage
- 7: Zwischenraum
- 8: Sperrschicht
- 9: Kammer
- 10: Leitstruktur
- 11: Stützstruktur
- 12: Kraftfahrzeug
- 13: Verbrennungskraftmaschine
- 14: Filterschicht
- 15: Wärmeschutzschicht
- 16: Leitungsanschluss
- 17: Pumpe
- 18: Filter
- 19: Sieb
- 20: Reduktionsmittelströmung
- 21: Draht
- 22: Strömungsbehinderungsmittel
- 23: Einströmrichtung
- 24: Ausströmrichtung
- 25: Tankboden
- 26: Öffnung
- 27: Abgasströmungsrichtung
- 28: Injektor
- 29: SCR-Katalysator
- 30: Steuergerät
- 31: erste Zone
- 32: zweite Zone
- 33: erstes Material
- 34: zweites Material

## Patentansprüche

1. Vorrichtung (1) zur Bereitstellung von flüssigem Reduktionsmittel für eine Abgasbehandlungsvorrichtung (2), aufweisend einen Tank (3) und eine Fördereinheit (4) mit einer Ansaugstelle (5) im Tank (3) an der Reduktionsmittel aus dem Tank (3) angesaugt werden kann, wobei die Ansaugstelle (5) von einer Trennlage (6) abgedeckt ist, so dass ein geschlossener Zwischenraum (7) zwischen der Ansaugstelle (5) und der Trennlage (6) vorliegt, **dadurch gekennzeichnet, dass** die Trennlage (6) in einer Ausströmrichtung (24) von dem Zwischenraum (7) in den Tank (3) hinein einen höheren Strömungswiderstand für Reduktionsmittel aufweist als in einer Einströmrichtung (23) von dem Tank (3) in den Zwischenraum (7) hinein.

2. Vorrichtung nach Patentanspruch 1, wobei die Trennlage (6) für Reduktionsmittel in Einströmrichtung (23) zumindest bis zu einer Schwelldruckdifferenz zwischen dem Tank (3) und dem Zwischenraum (7) von 0,01 bar bis 0,1 bar unidirektional durchlässig ist.

3. Vorrichtung (1) nach einem der vorhergehenden Patentansprüche, wobei die Trennlage (6) ein Filter (18) ist, der zumindest eine Sperrschicht (8) aufweist, welche den Strömungswiderstand der Trennlage (6) in Ausströmrichtung (24) erhöht.

4. Vorrichtung (1) nach Patentanspruch 1 oder 2, wobei die Trennlage (6) ein Sieb (19) ist, welches zumindest ein Strömungsbehinderungsmittel (22) aufweist, welches den Strömungswiderstand der Trennlage (6) in Ausströmrichtung (24) erhöht.

5. Vorrichtung (1) nach einem der vorhergehenden Patentansprüche, wobei die Fördereinheit (4) in einer Kammer (9) angeordnet ist, welche zumindest teilweise in dem Tank (3) angeordnet ist, und die Trennlage (6) die Kammer (9) derart umgibt, dass ein umlaufender Zwischenraum (7) zwischen der Kammer (9) und der Trennlage (6) vorliegt.

6. Vorrichtung (1) nach einem der vorhergehenden Patentansprüche, wobei in dem Tank (3) um die Trennlage (6) herum zumindest eine Leitstruktur (10) angeordnet ist, welche das Reduktionsmittel hin zu der Trennlage (6) leitet.

7. Vorrichtung (1) nach einem der vorhergehenden Patentansprüche, wobei die Trennlage (6) für Luftblasen in Ausströmrichtung (24) aus dem Zwischenraum (7) hinaus durchlässig ist.

8. Vorrichtung (1) nach einem der vorhergehenden Patentansprüche, wobei die Trennlage (6) den Wärmefluss in Einströmrichtung (23) begünstigt und den Wärmefluss in Ausströmrichtung (24) reduziert.

9. Vorrichtung (1) nach einem der vorhergehenden Patentansprüche, wobei die Trennlage (6) eine Stützstruktur (11) aufweist, die der Trennlage (6) Stabilität gibt, wobei der Strömungswiderstand der Stützstruktur (11) für Reduktionsmittel in Einströmrichtung (23) und in Ausströmrichtung (24) vernachlässigbar ist.

10. Kraftfahrzeug (12) aufweisend eine Verbrennungskraftmaschine (13) und eine Abgasbehandlungsvorrichtung (2) zur Reinigung der Abgase der Verbrennungskraftmaschine (13), sowie eine Vorrichtung (1) nach einem der vorhergehenden Patentansprüche, welche dazu eingerichtet ist, die Abgasbehandlungsvorrichtung (2) mit Reduktionsmittel zu versorgen.

## Claims

1. Device (1) for providing liquid reducing agent for an exhaust-gas treatment device (2), having a tank (3) and having a delivery unit (4) with an intake point (5) in the tank (3) at which reducing agent can be drawn in from the tank (3), wherein the intake point (5) is covered by a partition layer (6) such that a closed intermediate space (7) is provided between the intake point (5) and the partition layer (6), **characterized in that** the partition layer (6) has a higher flow resistance for reducing agent in an outflow direction (24) from the intermediate space (7) into the tank (3) than in an inflow direction (23) from the tank (3) into the intermediate space (7).

2. Device according to Patent Claim 1, wherein the partition layer (6) is unidirectionally permeable to reducing agent in the inflow direction (23) at least up to a threshold pressure difference of 0.01 bar to 0.1 bar between the tank (3) and the intermediate space (7).

3. Device (1) according to one of the preceding patent claims, wherein the partition layer (6) is a filter (18) which has at least one barrier ply (8) that increases the flow resistance of the partition layer (6) in the outflow direction (24).

4. Device (1) according to Patent Claim 1 or 2, wherein the partition layer (6) is a screen (19) which has at least one flow-impeding means (22) that increases the flow resistance of the partition layer (6) in the outflow direction (24).

5. Device (1) according to one of the preceding patent claims, wherein the delivery unit (4) is arranged in a chamber (9) which is arranged at least partially in the tank (3), and the partition layer (6) surrounds the chamber (9) such that an encircling intermediate space (7) is provided between the chamber (9) and the partition layer (6).

6. Device (1) according to one of the preceding patent claims, wherein at least one guide structure (10) is arranged in the tank (3) around the partition layer (6), which guide structure guides the reducing agent toward the partition layer (6).

7. Device (1) according to one of the preceding patent claims, wherein the partition layer (6) is permeable to air bubbles in the outflow direction (24) out of the intermediate space (7).

8. Device (1) according to one of the preceding patent claims, wherein the partition layer (6) promotes the flow of heat in the inflow direction (23) and reduces the flow of heat in the outflow direction (24).

9. Device (1) according to one of the preceding patent claims, wherein the partition layer (6) has a support structure (11) which imparts stability to the partition layer (6), wherein the flow resistance of the support structure (11) for reducing agent is negligible in the inflow direction (23) and in the outflow direction (24).

10. Motor vehicle (12) having an internal combustion engine (13) and having an exhaust-gas treatment device (2) for the purification of the exhaust gases of the internal combustion engine (13) and also having a device (1) according to one of the preceding patent claims which is designed to supply reducing agent to the exhaust-gas treatment device (2).

## Revendications

1. Dispositif (1) de mise à disposition d'agent réducteur liquide pour un dispositif (2) de traitement des gaz d'échappement, comportant un réservoir (3) et une unité (4) de transport ayant un point (5) d'aspiration dans le réservoir (3) où l'agent réducteur peut être aspiré du réservoir (3), le point (5) d'aspiration étant recouvert d'une toile (6) de séparation de manière à ce qu'il y ait un espace (7) intermédiaire fermé entre le point (5) d'aspiration et la toile (6) de séparation, **caractérisé en ce que** la toile (6) de séparation a, dans un sens (24) de sortie du courant de l'espace (7) intermédiaire au réservoir (3), une résistance à l'écoulement de l'agent réducteur plus grande que dans un sens (23) d'entrée du réservoir (3) à l'espace (7) intermédiaire.

2. Dispositif suivant la revendication 1, dans lequel la toile (6) de séparation est perméable unidirectionnellement à l'agent réducteur dans le sens (23) d'entrée au moins jusqu'à une différence de pression de seuil entre le réservoir (3) et l'espace (7) intermédiaire de 0,01 bar à 0,1 bar.

3. Dispositif suivant l'une des revendications précédentes, dans lequel la toile (6) de séparation est un filtre (18), qui a au moins une couche (8) d'arrêt augmentant la résistance à l'écoulement de la toile (6) de séparation dans le sens (24) de sortie du courant.

4. Dispositif suivant la revendication 1 ou 2, dans lequel la toile (6) de séparation est un tamis (19), qui a au moins un moyen (22) faisant obstacle à l'écoulement, qui augmente la résistance à l'écoulement de la toile (6) de séparation dans le sens (24) de sortie du courant.

5. Dispositif suivant l'une des revendications précédentes, dans lequel l'unité (4) de transport est disposée dans une chambre (9), qui est disposée, au moins en partie, dans le réservoir (3) et la toile (6) de séparation entoure la chambre (9), de manière à ce qu'il y ait un espace (7) intermédiaire faisant le tour entre la chambre (9) et la toile (6) de séparation.

6. Dispositif suivant l'une des revendications précédentes, dans lequel il y a, dans le réservoir (3), tout autour de la toile (6) de séparation, au moins une structure (10) de conduite, qui conduit l'agent réducteur jusqu'à la toile (6) de séparation.

7. Dispositif suivant l'une des revendications précédentes, dans lequel la toile (6) de séparation est perméable à des bulles d'air dans le sens (24) de sortie de l'espace (7) intermédiaire.

8. Dispositif suivant l'une des revendications précédentes, dans lequel la toile (6) de séparation favorise le flux de chaleur dans le sens (23) d'entrée du courant et réduit le flux de chaleur dans le sens (24) de sortie du courant.

9. Dispositif suivant l'une des revendications précédentes, dans lequel la toile (6) de séparation a une structure (11) d'appui qui lui (6) donne de la stabilité, la résistance à l'écoulement de la structure (11) d'appui pour l'agent réducteur étant négligeable dans le sens (28) d'entrée du courant et dans le sens (24) de sortie du courant.

10. Véhicule (12) automobile, comportant un moteur (13) à combustion interne et un dispositif (2) de traitement des gaz d'échappement pour épurer les gaz d'échappement du moteur (13) à combustion interne, ainsi qu'un dispositif (1) suivant l'une des revendications précédentes, qui est conçu pour alimenter le dispositif (2) de traitement des gaz d'échappement en agent réducteur.
